# EUROPEAN PATENT APPLICATION

(11) **EP 1 301 035 A2**
(43) Date of publication of application: **09.04.2003**
(21) Application number: 02022154.5
(22) Date of filing: 02.10.2002
(51) Int. Cl.: H04N 7/10, H04N 7/173

(54) **Signal filtering apparatus**

(30) Priority: 06.10.2001 GB 0124077
(71) Applicant: Technetix PLC, Henfield, West Sussex, BN5 9BJ (GB)
(72) Inventor: Broadhurst, Paul Antony, Arundel, West Sussex, BN17 7QQ (GB); Skelton, Christopher Mark, Melborn, Royston, Hertfordshire, SG8 6DZ (GB)
(74) Representative: Forsyth, Helen Jane

(57) **Abstract**

There is provided signal filtering apparatus (40) for use in a cable distribution network comprising a forward path (42, 44, 50, 56) from a cable provider to a subscriber outlet (62, 64, 66, 68), a return path (70) from the subscriber outlet to the cable provider, and a gate switch (72) placed in the return path. The gate switch (72) closes the return path and prevents signals passing from the subscriber outlet to the cable provider and is selectively openable to allow communication from the subscriber outlet to the cable provider. The gate switch (72) is typically a pin diode switch or a gallium arsenide switch.

## Description

### Field of the Invention

This invention relates to signal filtering apparatus for use in a cable network, and in particular to such apparatus that aims to reduce noise in a return path from a cable subscriber to a cable provider.

### Background to the Invention

Signal filtering apparatus is used in distribution networks, such as cable networks, to remove unwanted signal components, both in the path from cable provider to cable subscriber and in the return path from cable subscriber to cable provider.

The contribution to the return signal from noise generated by subscribers, for example those with direct fed TV sets or unconnected output ports not connected to a set top box, is of particular concern as it summed across the network. Thus whilst noise in the signal originating from the provider to the subscriber is split amongst N subscribers, noise generated by each of the N subscribers adds to create a large amount of noise in the signal returned to the cable provider.

Previously the difficulties with unwanted noise have been dealt with by placing a high pass filter on the signal path to each subscriber, the high pass filter only allowing a forward path signal within a given frequency range to pass to the subscriber, and the return path being permanently blocked to all low frequencies. By blocking the return path in this way, the subscriber cannot provide a source of noise to the network. Whilst this avoids noise contributions from direct fed TV sets and unconnected ports, if the subscriber changes to an interactive digital system, the high pass filter needs to be removed manually to allow passage of the low frequency signals used to interact with the provider. This can be costly and time consuming.

It is an aim of the present invention to ease upgrading of existing networks for broadband digital service whilst preventing the network from being degraded by old elements of the network that have yet to be replaced, such as direct feed to analogue receivers.

### Summary of the Invention

In accordance with one aspect of the present invention, there is provided signal filtering apparatus for use in a cable distribution network, the apparatus comprising a forward path from a cable provider to a subscriber outlet, a return path from the subscriber outlet to the cable provider, and an isolating device placed in the return path to close the return path and prevent signals passing from the subscriber outlet to the cable provider, wherein the isolating device is selectively openable to allow communication from the subscriber outlet to the cable provider. This ensures that the return path is closed at all times except when signal transmission from the subscriber outlet, for example a T.V. set top box, to the cable provider is required, for example when the subscriber requires a pay per view option which needs to be communicated to the provider. By having such a switched return path, noise ingress along the return path, for example from analogue set top boxes or from unconnected ports of the set top box, is prevented except when the isolating device is opened. Preferably the isolating device is only openable for a period of time required to allow communication from the subscriber outlet to the cable provider, so that noise from any given subscriber outlet only contributes to the network for the time required to communicate with the network.

The isolating device may be a gate switch, such as an RF switch. This can be provided in a variety of ways, for example using a pin diode switch, or a Gallium Arsenide (GaAs) switch. The isolating device may also comprise an amplifier adapted to be powered down so as to close the return path and prevent signals passing from the subscriber outlet to the cable provider.

If required, the gate switch may be latched so as to remain open for a set period to avoid any cut-off of the signal to be transmitted from the subscriber outlet to the network provider.

The isolating device may be selectively openable in response to the sensing of equipment being connected to the subscriber outlet. For example, the isolating device can respond to increases in resistance as a result of the equipment being connected and open the return path in response to this.

The isolating device may be selectively openable in response to return path transmissions above a threshold power level, for example above 30dBmV. The isolating device may be operable to remain open for the period of time during which the return path transmissions exceed the threshold power level, and thus just respond to a burst of signal above that level, or alternatively, the isolating device may be operable to remain open for a set period of time once return path transmissions above the threshold power level are detected. The isolating device may be combined with a signal detector, for example as provided by the combination of the gate switch and a signal detector means.

In accordance with another aspect of the present invention, there is provided a cable network having at least one signal filtering apparatus as aforesaid. Preferably the cable network has a plurality of such apparatus.

The invention will now be described with reference to the accompanying drawings in which:
Figure 1 is a schematic view of a cable distribution network; and
Figure 2 is a circuit diagram of a network interface unit embodying the present invention.

### Description

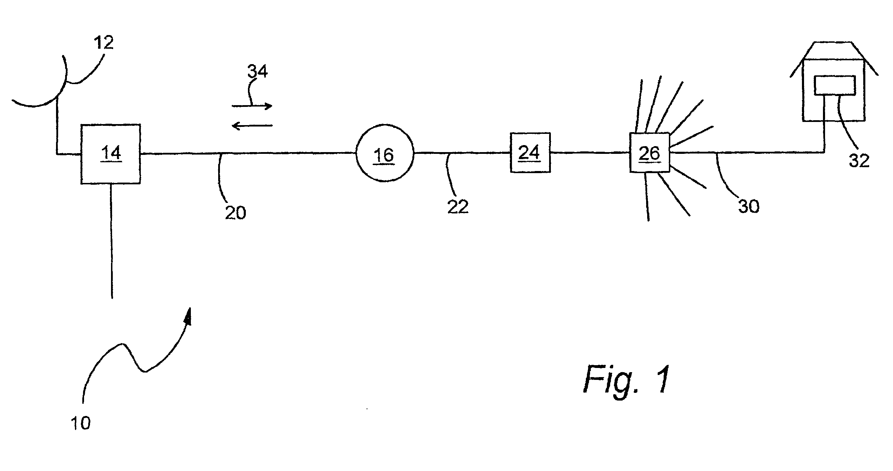

Figure 1 shows a diagrammatic view of a cable distribution network 10. Signals are transmitted to and received from a cable provider at antenna 12 and passed to a head end 14 which is in two-way communication with one or more hubs 16, only one of which is shown. The communication link between head end 14 and hub 16 is by a frequency modulated signal which passes along an optical fibre 20. Each hub 16 has a number of paths 22 to separate nodes 24 which are in turn connected to respective distribution points 26 or cabinets from which run a large number of signal paths or drops 30, each drop communicating with a set top box 32 associated with a cable subscriber. Typically, each distribution point 26 will serve 100 houses, with each hub 16 serving 5-40 nodes. Thus typically each hub 16 serves around 4000 houses.

A two-way signal path is thus provided between subscriber and cable provider by way of the cabling and antenna link. Signal transmission from hub to subscriber is achieved using a series of amplifiers and splitters which all operate at the same frequency. Typically signals passing from hub to user are in the range 88-860MHz although most are of a frequency below 750MHz. The return path 34 from subscriber to head end is allocated a narrow bandwidth of 5-65MHz and to use the bandwidth satisfactorily, the signals returned from subscriber to hub are sent at a very high rate in a very compressed form, usually by using quadrature amplitude modulation (QAM) which is very sensitive to noise.

Where a drop is connected to an analogue set top box, or where a network interface unit between the drop and the set top box has open ports, that drop will supply interference to the rest of the network creating low frequency noise in the return signal. Potentially each drop can contribute to noise in the return path, and thus the noise contribution from, say, 4000 homes is summed and added to the return path. This ingress of noise into the return signal is extremely undesirable as it degrades the signal quality of the entire network 10, and causes noise saturation of the fibre connection 20 between hub 16 and head end 14.

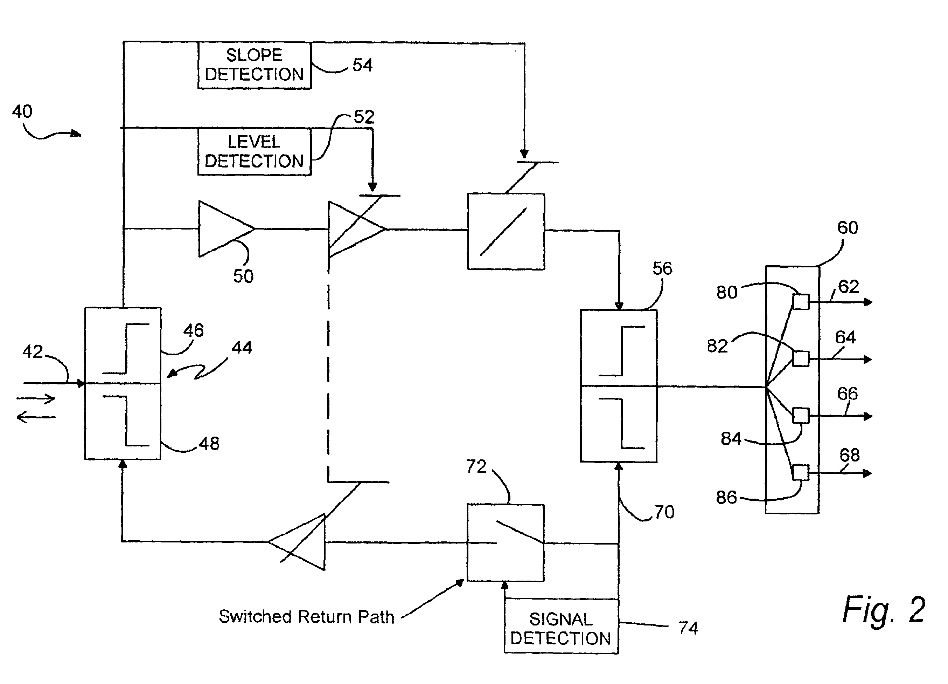

Figure 2 illustrates a network termination unit or network interface unit 40 which allows the return path 34 along each drop 30 to he closed off and isolated except when communication is required from the subscriber to the cable provider along the return path.

The network interface unit 40 is positioned between the drop 30 and the set top box 32 of the subscriber. The network interface unit 40 comprises an inlet 42 connected to the drop 30 which allows two-way communication with the network provider. The inlet 42 passes to a diplexer or signal splitter 44 which consists of a high pass filter 46 and low pass filter 48. The signals are amplified by amplifier 50 and optionally level detection 52 and slope detection 54 of the signal is provided so that if required the signal characteristics can be adjusted before reaching the subscriber. The amplified signal then passes to an output diplexer 56 where the low pass and high pass elements of the signal are recombined and fed to a passive splitter matrix 60 with four outlet ports 62, 64, 66, 68 having port to port isolation. A set top box is connectable to an outlet port and thus a number of set top boxes can be provided for one subscriber, or other cable devices such as a telephone. A return path 70 is provided between the output diplexer 56 and the input diplexer 44 to allow communication from the subscriber to the cable provider, for example for interactive television or when the subscriber wishes to request access to a particular programme.

Within the return path 70, there is provided a gate switch 72 in parallel with a signal detector 74. The gate switch 72 is usually closed or shut, so as to break the connection between subscriber and provider and prevent any signal passing along the return path 70. However, when a signal of given characteristics, i.e. frequency or duration, is detected by the signal detector 74, the gate switch 72 is opened so as to complete the return path, and allow communication between the subscriber and the provider. Thus a switched return path is provided, where each return path of a subscriber is closed and isolated from the network. This prevents a noise contribution from each drop to the return path, except when the gate switch 72 is opened to allow signal transmission along the return path. Thus when a subscriber wants to communicate with the provider, typically a hand-held device operated by the subscriber will generate a signal burst, perhaps of a couple of microseconds, which passes along the outlet port through the passive splitter 60 and the output diplexer 56 to reach the signal detector 74.

The signal detector 74 is configured to open the gate switch in response to signals above a pre-determined power level, for example those above 30dBmV, so that frequencies representing noise do not cause the signal detector to open the gate. Thus a lower frequency cut-off is provided. The frequency of the signal generated by the subscriber or user will be above the cut-off point, and when detected by the signal detector will cause the gate switch to be opened and the return path completed allowing the signal burst to pass along the drop 30 to the head end 14 for onward transmission to the cable provider. The gate closes once the burst of signal has passed, although if required may be arranged to latch open so that the gate hangs for a set period of time to avoid inappropriate cut-off of the instruction signal passing from subscriber to provider. Thus each drop only supplies noise to the network when the gate switch 72 is opened and instead of potentially 4000 homes contributing noise to the return path at all times, only subscribers actually communicating with the provider will generate noise at any given time. Thus by using a switched or gated return path, the number of return paths producing a noise contribution is much reduced, and the noise contribution is only for very short periods of time. Thus ingress of noise into the return signal is substantially reduced by the selectively openable gate switch 72.

The gate switch can be provided on an amplifier, or as a separate control. It also does not necessarily need to be associated with a signal detector, but rather can be responsive to equipment sensors associated with the outlet ports. Examples of suitable isolation devices to use in the return path, include pin diodes switched on by an amplifier, or by powering down an amplifier, or by using a GaAs switch on an amplifier.

Generally of the number of outlet ports 62, 64, 66, 68 provided by the network interface unit 40, only one 62 will be connected to a set top terminal. The remaining ports are un-terminated and pick up noise which passes along the return path 70. It is known to screw a termination resistor on the unused outlet ports to simulate the large resistance of a set top box and so prevent noise pickup. However, the resistors are expensive and invariably the user removes them from the outlet.

Thus within the passive splitter 60, open connection transistors 80, 82, 84, 86 or pin diodes are placed between the connection to the outlet port and the connection to the outlet diplexer 56, a respective transistor being provided for each port. This provides an automatic way for the network interface unit 40 to compensate for un-terminated connections or outlet ports, the ports then being self-terminating, with the transistor opening the line between the outlet port and the diplexer. If resistance is present and if no resistance is detected, the line remains closed. Mechanical equivalents to the transistors can also be used such as a sliding contact on a printed circuit board.

Thus the present invention resolves various problems encountered with cable networks. In particular, the overall performance of the network is prevented from being degraded by a substantial amount by elements of the network that have yet to be updated, such as analogue boxes, and also any noise contributions resulting from cabling within a customer's house are prevented from adding to the noise levels in the network. The network interface unit of Figure 2, in particular, allows the end user to be isolated from the remainder of the network, and provides a demarcation point for where the cable installer has responsibility up to. It also allows a customer to place their own cabling in the home if they wish without affecting the remainder of the network.

## Claims

1. Signal filtering apparatus (40) for use in a cable distribution network (10), the apparatus comprising a forward path (42, 44, 50, 56) from a cable provider to a subscriber outlet (62, 64, 66, 68), a return path (70) from the subscriber outlet to the cable provider, and an isolating device (72) placed in the return path (70) to close the return path and prevent signals passing from the subscriber outlet (62, 64, 66, 68) to the cable provider, wherein the isolating device (72) is selectively openable to allow communication from the subscriber outlet (62, 64, 66, 68) to the cable provider.

2. Apparatus according to claim 1, wherein the isolating device (72) is only openable for a period of time required to allow communication from the subscriber outlet (62, 64, 66, 68) to the cable provider.

3. Apparatus according to claim 1 or 2, wherein the isolating device (72) comprises a gate switch.

4. Apparatus according to claim 3, wherein the gate switch (72) is latched so as to remain open for a set period to avoid any cut-off of the signal to be transmitted from subscriber outlet (62, 64, 66, 68) to the network provider.

5. Apparatus according to any preceding claim, wherein the isolating device (72) is selectively openable in response to the sensing of equipment being connected to the subscriber outlet (62, 64, 66, 68).

6. Apparatus according to claim 5, wherein the isolating device (72) is adapted to respond to increases in resistance as a result of the equipment being connected to the subscriber outlet (62, 64, 66, 68) by opening the return path (70).

7. Apparatus according to any preceding claim, wherein the isolating device (72) is selectively openable in response to return path transmissions above a threshold power level.

8. Apparatus according to claim 7, wherein the isolating device (72) is operable to remain open for a set period of time once return path transmissions above the threshold power level are detected.

9. Apparatus according to any preceding claim, wherein the isolating device is combined with a signal detector (74).

10. A cable network (10) having at least one signal filtering apparatus (40) according to any preceding claim.
